# EUROPEAN PATENT APPLICATION

(11) **EP 3 936 953 A1**
(43) Date of publication of application: **12.01.2022**
(21) Application number: 19918125.6
(22) Date of filing: 04.03.2019
(51) Int. Cl.: G05B 19/418

(54) **SIMULATION SYSTEM**

(71) Applicant: Fuji Corporation, Chiryu-shi, Aichi 472-8686 (JP)
(72) Inventor: HIGASHIDA, Akihiro, Chiryu-shi, Aichi 472-8686 (JP); KODAMA, Seigo, Chiryu-shi, Aichi 472-8686 (JP); FUJITA, Masatoshi, Chiryu-shi, Aichi 472-8686 (JP)
(74) Representative: Grünecker Patent- und Rechtsanwälte PartG mbB
(86) International application number: PCT/JP2019/008310
(87) International publication number: WO 2020/178933

(57) **Abstract**

A simulation system that executes a simulation using a model constructed by module data of each of multiple modules, the system includes a storage section configured to store connection relationship information defining a relationship between pieces of the module data connectable to each other; and a confirmation section configured to confirm whether pieces of the module data are connectable based on the connection relationship information in a case where multiple pieces of module data are selected.

## Description

### Technical Field

The present specification discloses a simulation system.

### Background Art

Conventionally, a robot system including a robot capable of attaching and detaching a tool such as an end effector to and from an arm is proposed. For example, Patent Literature 1 discloses a system for constructing a model of a simulation by connecting a tool to a tool holder of an arm by plug-and-play and executing the simulation.

### Patent Literature

Patent Literature 1: JP-T-2007-535989

### Summary of the Invention

### Technical Problem

In the above-described system, although connecting is executed by plug-and-play, specific connection information or a connection method is not mentioned. There are various types of modules provided in the robot, such as a tool holder and a tool to be attached and detached, and since the connection configurations are diversified, there may be a case where module data cannot be connected. On the other hand, when the user of the simulation system or the like is caused to judge whether these connections are performed, it may take time to judge or cause a judgment error.

A main object of the present disclosure is to appropriately confirm whether module data are connected and to rapidly execute a simulation.

### Solution to Problem

The present disclosure takes the following means to achieve the main object described above.

A simulation system of the present disclosure is a simulation system that executes a simulation using a model constructed by module data of each of multiple modules, the system including a storage section configured to store connection relationship information defining a relationship between pieces of the module data connectable to each other; and a confirmation section configured to confirm whether pieces of the module data are connectable based on the connection relationship information in a case where multiple pieces of module data are selected.

In the simulation system of the present disclosure, the connection relationship information defining the relationship between pieces of the module data connectable to each other is stored, and whether pieces of the module data are connectable is confirmed based on the connection relationship information in a case where multiple pieces of module data are selected. As a result, it is possible to appropriately confirm whether pieces of the module data are connectable without causing the user of the simulation system to judge whether to connect. Therefore, it is possible to appropriately construct a model from the module data to rapidly execute a simulation.

### Brief Description of Drawings

Fig. 1 is a schematic diagram schematically illustrating a configuration of equipment installation support system 10.
Fig. 2 is an explanatory diagram schematically illustrating marketplace MP.
Fig. 3 is a schematic diagram schematically illustrating a configuration of work system 60.
Fig. 4 is an explanatory diagram illustrating an example of module DB 30.
Fig. 5 is a flowchart illustrating an example of registration processing.
Fig. 6 is an explanatory diagram illustrating an example of connection relationship information.
Fig. 7 is a flowchart illustrating an example of connection processing when a model is constructed.
Fig. 8 is an explanatory diagram illustrating an example of a state where module data is automatically connected.
Fig. 9 is a flowchart illustrating an example of connection display processing when a model is constructed.
Fig. 10 is an explanatory diagram illustrating a modification example of a state where module data is automatically connected.

### Description of Embodiments

Next, embodiments of the present disclosure will be described with reference to the drawings.

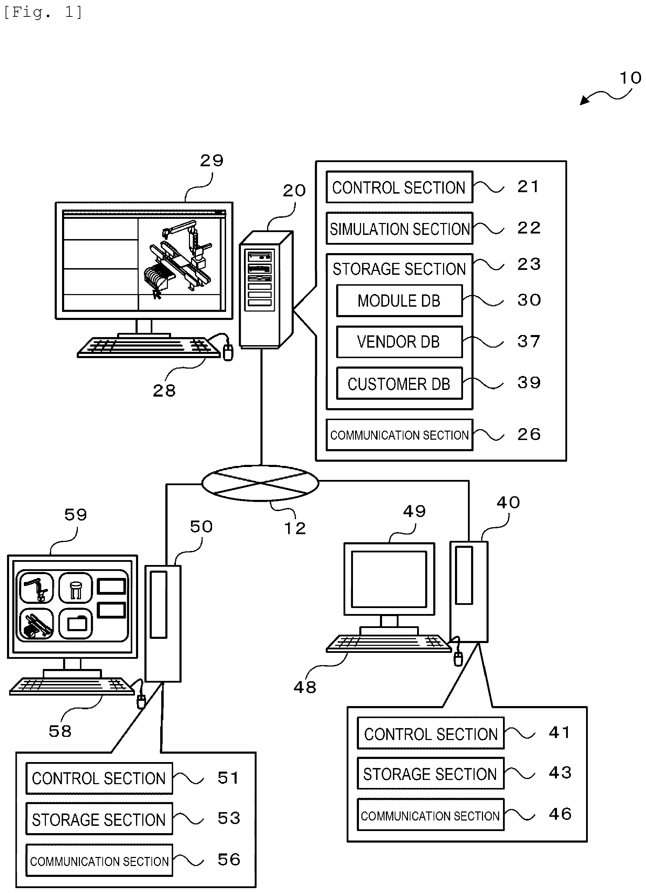

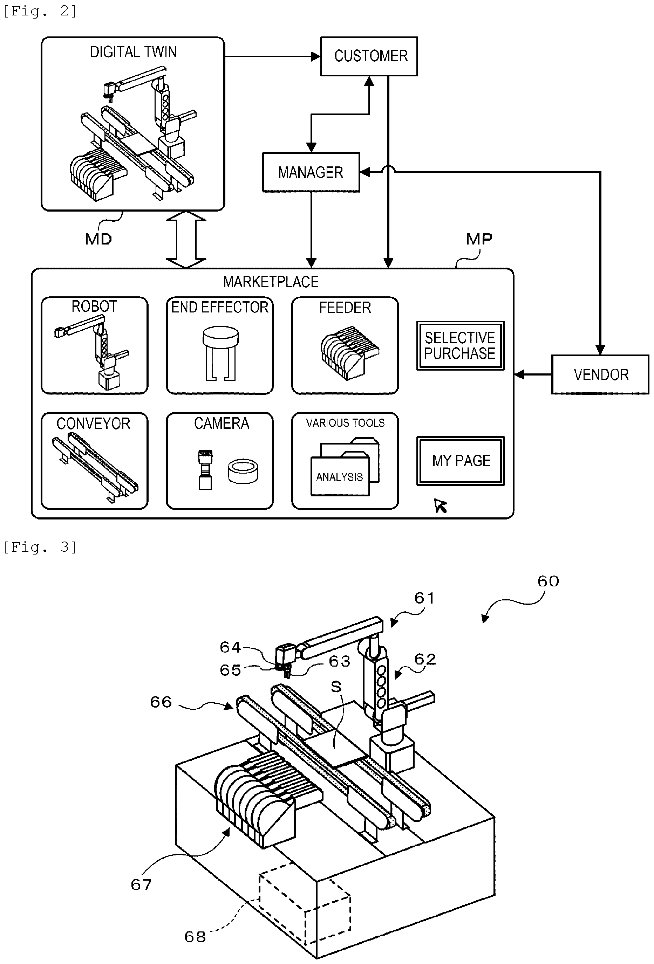

Fig. 1 is a schematic diagram schematically illustrating a configuration of equipment installation support system 10 according to the present embodiment, Fig. 2 is an explanatory diagram schematically illustrating marketplace MP, and

Fig. 3 is a schematic diagram schematically illustrating a configuration of work system 60. As illustrated in Figs. 1 and 2, equipment installation support system 10 is provided with management server 20 that manages marketplace MP for a customer to purchase various equipment and devices (hereinafter, referred to as modules) provided by a vendor. In equipment installation support system 10, management server 20 is connected to vendor terminal 40 and customer terminal 50 via network 12. Although one vendor terminal 40 and one customer terminal 50 are illustrated in Fig. 1, multiple vendor terminals 40 and multiple customer terminal 50 are actually connected.

Management server 20 is provided with control section 21, simulation section 22, storage section 23, and communication section 26. Control section 21 includes CPU, ROM, RAM, and the like, and controls an entire server such as management of marketplace MP. Simulation section 22 constructs model MD (digital twin, refer to Fig. 2) such as work system 60 (refer to Fig. 3) in which modules that can be purchased in marketplace MP are combined in a virtual space, and executes simulation using model MD in the virtual space. Simulation section 22 also connects the modules when model MD is constructed. Storage section 23 is configured to include an HDD or the like, and stores various application programs, various databases (DBs), and the like. Communication section 26 is connected to network 12 or the like and communicates with vendor terminal 40, customer terminal 50, or the like. Various instructions and the like by a manager are inputted to management server 20 from input section 28 such as a keyboard and a mouse. In addition, management server 20 causes various information to be displayed on display section 29 such as a display. Management server 20 is not limited to the one including simulation section 22 and storage section 23 (various DBs), and may be configured as another device capable of communicating with management server 20 by the simulation section, or may be configured as another device capable of communicating with management server 20 by a data server storing various DBs.

Vendor terminal 40 is provided with control section 41 having CPU, ROM, RAM, and the like, storage section 43 such as HDD for storing various application programs and various data, and communication section 46 connected to network 12 and the like for communicating with management server 20 and the like. Various instructions and the like by the vendor are inputted to vendor terminal 40 from input section 48 such as a keyboard and a mouse. In addition, vendor terminal 40 causes various information such as a registration screen for registering the module data of the module of a providing target in marketplace MP to be displayed on display section 49 such as a display.

Similar to vendor terminal 40, customer terminal 50 is provided with control section 51, storage section 53, and communication section 56. Communication section 56 may communicate with control device 68 of work system 60 (described later) via network 12 or the like. Various instructions and the like by the customer are inputted to customer terminal 50 from input section 58 such as a keyboard and a mouse. In addition, customer terminal 50 causes various information such as a top screen (purchase screen) of marketplace MP, model MD of the simulation, and an execution result of the simulation to be displayed on display section 59 such as a display.

Here, an example of work system 60 in which modules that can be purchased by marketplace MP are combined will be described. For example, work system 60 can be configured as a system for executing a predetermined operation by robot 61, and in the example illustrated in Fig. 3, is provided with board conveyance device 66 and feeder 67, in addition to robot 61. Examples of the predetermined operation include a mounting work in which a workpiece such as a mechanical component or an electronic component is picked up by robot 61 and mounted on board S, and the like. Robot 61 is provided with vertical articulated robot arm 62 and control device 68 that controls the entire system including an operation of robot arm 62. In addition to end effector 63 serving as a work tool being detachably attached, camera 64 for capturing an image and lighting 65 such as a ring light disposed coaxially with camera 64 are attached to a tip link of robot arm 62. Examples of end effector 63 include an electromagnetic chuck, a mechanical chuck, and a suction nozzle. Board conveyance device 66 conveys board S by a pair of belt conveyors. Feeder 67 is configured as a tape feeder that feeds a tape in which multiple workpieces are accommodated at predetermined intervals. Feeder 67 is not limited to the tape feeder, and may be a tray feeder or the like that supplies a tray on which multiple workpieces are disposed. Control device 68 is configured to include CPU, ROM, HDD, RAM, and the like, and stores a system program or the like for managing entire work system 60 in addition to the operation program of robot 61. In addition, Although not illustrated, an operation program of board conveyance device 66 is stored by a Programmable Logic Controller (PLC) of board conveyance device 66, and an operation program of feeder 67 is stored by the PLC of feeder 67. Robot 61 (robot arm 62), end effector 63, camera 64, lighting 65, board conveyance device 66, and feeder 67 constituting such work system 60 are referred to as a module, respectively.

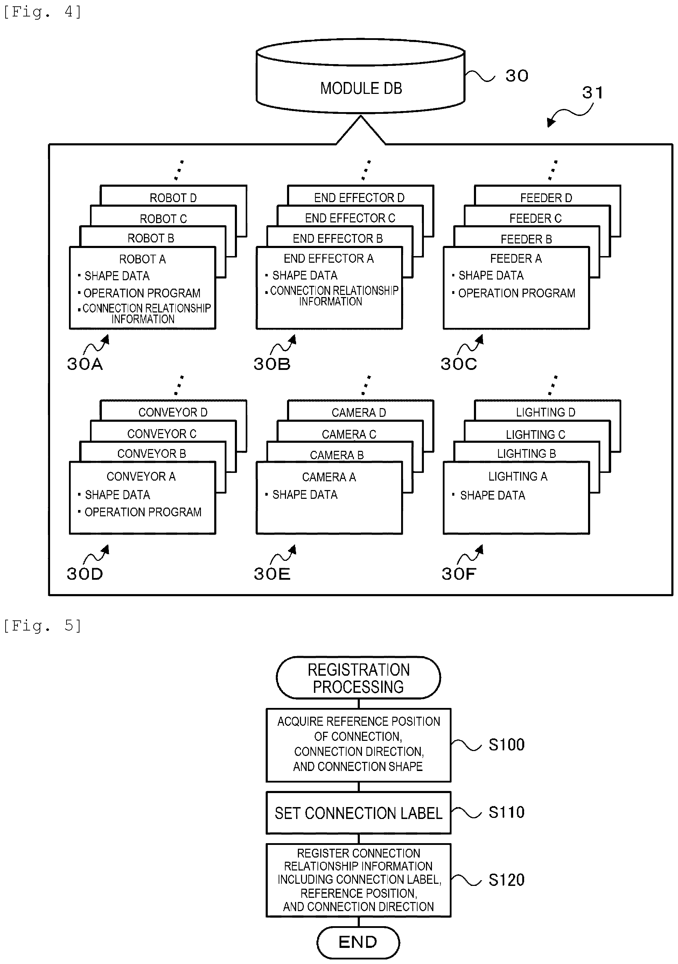

Storage section 23 of management server 20 stores module database (DB) 30, vendor DB 37, and customer DB 39 illustrated in Fig. 4. Although not illustrated, vendor DB 37 registers a name of a vendor for which authentication registration is executed, a vendor ID unique to each vendor, a contact address such as an e-mail address and an address, information on the type of a module provided by the vendor, and the like. In addition, although not illustrated, customer DB 39 registers the name of the customer for whom authentication registration is executed, a customer ID unique to each customer, a contact address such as an e-mail address and an address, a purchase history of the customer, and the like.

Module DB 30 is a DB for registering module data or the like registered by the vendor from vendor terminal 40 via the registration screen, and multiple pieces of module data 31 are registered for each type of module. For example, multiple pieces of module data 31 are separately registered as robot data 30A, end effector data 30B, feeder data 30C, conveyor data 30D, camera data 30E, and lighting data 30F as illustrated in Fig. 4. On robot data 30A, module data of robot arm 62 (robot A) and module data of other various robots B to D are registered. The various robots may be a horizontal articulated type or a parallel link type other than the vertical articulated type. These module data include shape data such as three-dimensional CAD data of robots A to D, operation programs, connection relationship information defining a connection relationship with another module, specifications, and the like. Similarly, on end effector data 30B, module data including shape data, the connection relationship information, specifications, and the like of end effector 63 (end effector A) that can be attached to or detached from (connected to) robot A or other types of end effectors B to D that can be attached to or detached from robots A to D are registered. In addition, on feeder data 30C, module data including shape data and operation programs of feeder 67 (feeder A) and other types of feeders B to D are registered. On conveyor data 30D, module data including shape data, operation programs, specifications, and the like of conveyor A serving as board conveyance device 66 or other types of conveyors are registered. On camera data 30E, module data including shape data and specifications of camera 64 (camera A) and other types of cameras B to D are registered. On lighting data 30F, module data including shape data and specifications of lighting 65 (lighting A) and other types of lighting B to D are registered. In addition, although not illustrated, on module DB 30, module data including shape data, physical property data, and the like of a representative workpiece of work target are also registered. The module data of the workpiece may be registered by a vendor or a manager requested by a customer, and is used in simulation using model MD.

On the top screen of marketplace MP displayed on customer terminal 50 or the like, it is possible to request and browse the purchase of these modules, request and browse the purchase of various tools, log in to the customer's my page, and the like. As illustrated in Fig. 2, icons or tool icons for types of modules such as a robot, an end effector, a feeder, a conveyor, a camera (including lighting here), a purchase button, a login button to my page, and the like are displayed on the top screen. When the customer selects an icon of the desired module after operating (clicking) the purchase button by an operation input using input section 57, a module selection screen (not illustrated) for selectively displaying a list of the module data of the relevant type is displayed. For example, when the customer selects an icon of the robot, each module data 31 of robots A to D is displayed in a list, so that the customer can select and purchase a necessary module from module data 31. The module data displayed in the list is registered in module DB 30. In addition, when the customer selects an icon of a tool after operating the purchase button, a tool selection screen (not illustrated) that displays a list of various tools to be selectable is displayed. The customer can select and purchase necessary tools from various tools. Examples of the various tools include an analysis tool that collects and analyzes information such as the work status of each module and the frequency of abnormality occurrence, a suggestion tool that proposes an improvement proposal such as module change from an analysis result, and a layout tool that efficiently lays out a module. The customer can select an icon of a module or an icon of a tool without clicking the purchase button to browse the contents of the module or the tool displayed in the list. In addition, when the customer logs in to my page, it is possible to confirm the purchase history of the module, the content and the change history of the module to be installed, and communication items from management server 20 or the vendor.

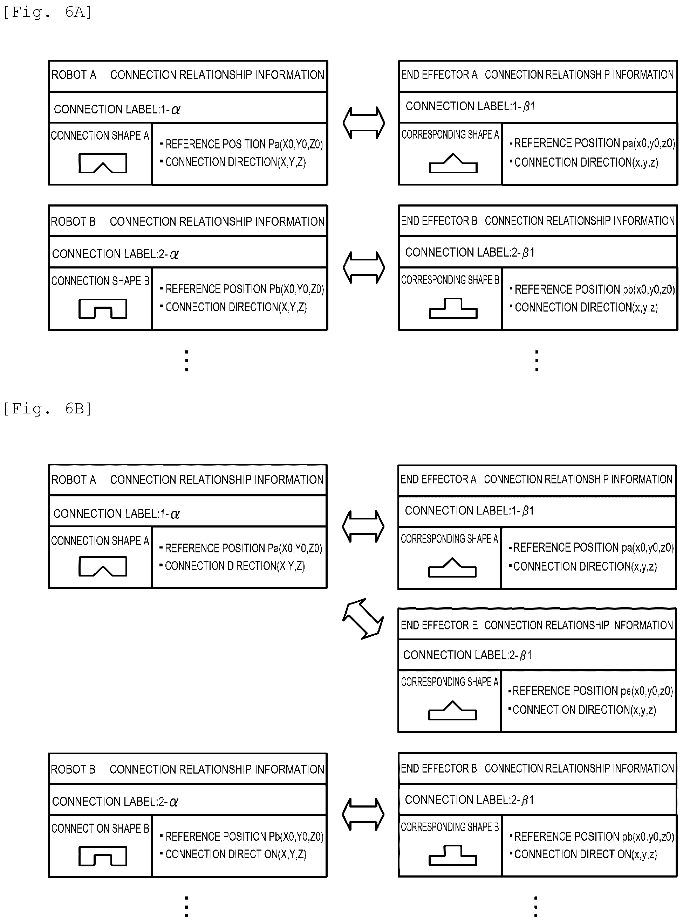

Next, processing of equipment installation support system 10 configured as described above, particularly, processing when registering a module of purchase target in marketplace MP, and processing when constructing model MD from each module will be described. Fig. 5 is a flowchart illustrating an example of registration processing, and Fig. 6 is an explanatory diagram illustrating an example of connection relationship information. The registration processing is executed by control section 21 of management server 20 when a connectable module such as a robot or an end effector is registered via the registration screen displayed on display section 49 of vendor terminal 40. When registering a module connectable to another module, the vendor inputs various information described below that are necessary for connection.

In this processing, control section 21 of management server 20 first acquires each piece of information on the reference position of the connection, the connection direction, and the connection shape of the module (S100), and sets a connection label (label information) indicating the connection shape (S110). Each piece of information of the reference position, the connection direction, and the connection shape is acquired as inputted by the vendor. In addition, as the information on the connection shape, for example, information on whether a shape of a protrusion portion for connection provided on the end effector is any of a cylindrical shape or a conical shape, or information on the size of the protrusion portion such as the outer diameter of a base end, the outer diameter of a tip end, and the protrusion height of the protrusion portion is acquired. The same information is acquired for a recessed portion for connection. The connection relationship information including a set connection label and each piece of information acquired in S100 is registered in the module data (S120), and the registration processing is ended.

For example, in the connection relationship information illustrated in Fig. 6A, connection label "1-α" indicating connection shape A, reference position Pa of the connection, and the information on the connection direction is registered in the connection relationship information in the module data of robot A. The connection shape indicates the shape of the tip link (connection surface) in robot arm 62 of robot A, and is information indicating, for example, the shape, size, position, and the like of the recessed portion into which the protrusion portion such as a cylindrical portion or a conical portion provided in the end effector is fitted. Reference position Pa is a position serving as a reference when another module such as an end effector is connected, such as a connection center position of the tip link. The connection direction represents the direction of the tip link when connected to another module in the XYZ coordinate system with reference position Pa as the origin. Similarly, connection label "2-α", reference position Pb of the connection, and the information on the connection direction are also registered in the module data of another robot B to be included in the connection relationship information. On the other hand, the connection relationship information is also registered in the end effector connected to the robot. For example, connection label "1-β1" indicating that the connection label corresponds to connection shape A, reference position pa1 of the connection, and information on the connection direction are registered in the connection relationship information in the module data of end effector A. Similarly, connection label "2-β1", reference position pb1 of the connection, and the information on the connection direction is also registered in the module data of another end effector B to be included in the connection relationship information. Connection label "1-α" and connection label "1-β1" represent a relationship connectable, and connection label "2-α" and connection label "2-β1" represent a relationship connectable. That is, the connection label of the present embodiment indicates the connection relationship corresponding to a leading numeral, and α and β indicate the robot and the end effector, respectively. In addition, in a case where there are multiple end effectors connectable to the same robot, the numerals after β are set in order from the value 1.

In addition, Fig. 6B illustrates a state where the connection relationship information of end effector E is newly added from the state illustrated in Fig. 6A. Here, since end effector E corresponds to connection shape A, connection label "1-β2" is set by control section 21, and the information on the connection label, the reference position Pe of the connection, and the connection direction are registered in the connection relationship information. As described above, in the present embodiment, it is possible to additionally store the connection relationship information of new module data. The case where end effector E connectable to robot A is added is exemplified in Fig. 6B, however, the present invention is not limited to this, and it is also possible to additionally store a combination of a new robot and an end effector connectable to the new robot.

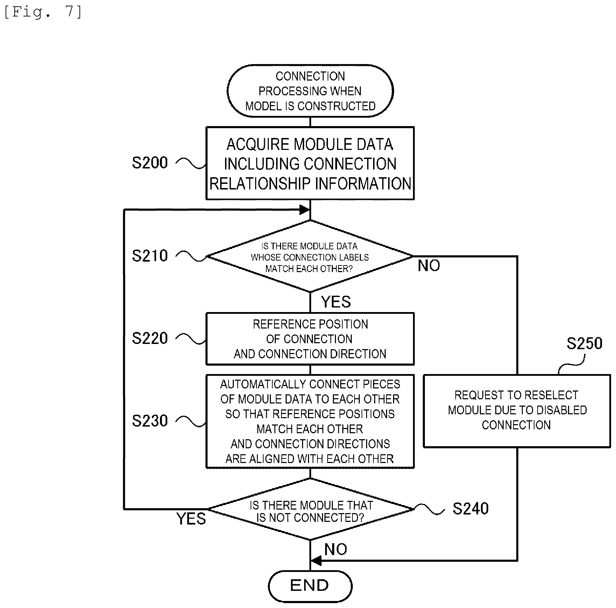

Fig. 7 is a flowchart illustrating an example of connection processing when a model is constructed. The connection processing when the model is constructed is processing executed on the module data including the connection relationship information when simulation section 22 constructs model MD using, for example, multiple pieces of module data selected by the customer. Simulation section 22 executes this processing in a case where multiple robots, end effectors, or the like are selected as the modules, for example. First, simulation section 22 acquires the module data including the connection relationship information (S200), and determines whether there is module data whose connection labels match each other (S210). Simulation section 22 determines that there is module data whose connection labels match each other in a case where the leading numerals of the connection label included in the module data of the robot and the connection label included in the module data of the end effector are the same as each other. Simulation section 22 acquires information on the reference positions of the connection and the connection directions of each piece of the matching module data (S220). Next, simulation section 22 automatically connects pieces of the module data to each other so that the reference positions match each other and the connection directions are aligned with each other (S230).

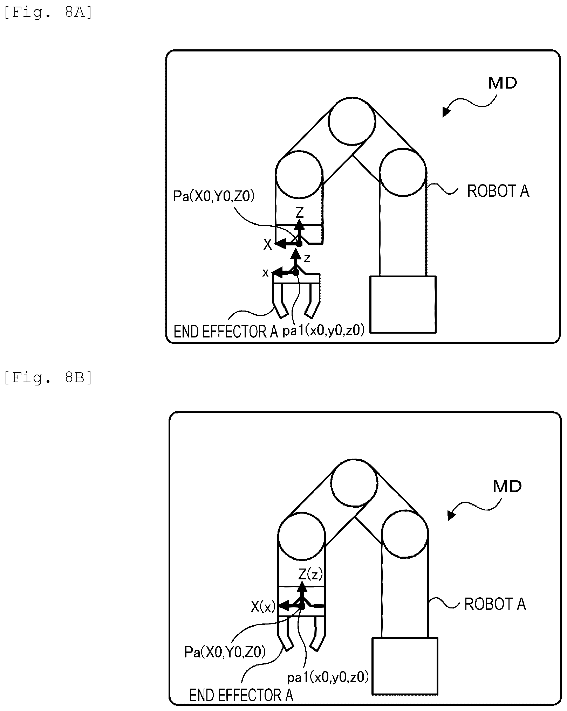

Fig. 8 is an explanatory diagram illustrating an example of a state where pieces of the module data are automatically connected to each other. In Fig. 8, robot A and end effector A are illustrated in a simplified manner. In robot A, reference position Pa (X0, Y0, Z0) of the tip link in robot arm 62 and a connection direction of the XYZ coordinate system with reference position Pa as the origin are defined. The Y-coordinate is a direction perpendicular to the drawing sheet, and thus not illustrated. On the other hand, in end effector A, reference position pa1 (x0, y0, z0) of the connection and a connection direction of the xyz coordinate system with reference position pa1 as the origin are defined. The y-coordinate is a direction perpendicular to the drawing sheet, and thus not illustrated. Simulation section 22 matches reference position Pa of robot A and reference position pa1 of end effector A, and aligns the directions so that each axis (the X-axis and the x-axis, the Y-axis and the y-axis, the Z-axis and the z-axis) of the XYZ coordinate system of robot A and the xyz coordinate system of end effector A match each other to automatically connect end effector A to robot A (refer to Fig. 8B). Although the Y-axis and the y-axis are not illustrated, it is assumed that any axis matches in the direction perpendicular to the drawing sheet. As described above, since simulation section 22 automatically connects the end effector to the robot on the digital twin, the user of the simulation does not need to connect the end effector.

When pieces of the module data are automatically connected to each other in this manner, simulation section 22 determines whether there is another module data that is not connected (S240), and returns to S210 when it is determined that there is module data that is not connected. In addition, when it is determined in S210 that there is module data whose connection labels do not match each other, simulation section 22 requests control section 21 to reselect the module because the connection is disabled (S250), and ends the connection processing when the model is constructed. For example, in a case where robot A having the connection label of "1-α" and end effector B having the connection label of "2-β1" are selected, simulation section 22 determines that connection is disabled and requests reselection. When it is determined in S240 that there is no module data that is not connected, simulation section 22 ends the connection processing when the model is constructed.

Here, the correspondence relationships between the constituent elements in the present embodiment and the constituent elements in the present disclosure will be clarified. Equipment installation support system 10 of the present embodiment corresponds to a simulation system, storage section 23 of management server 20 corresponds to a storage section, and simulation section 22 of management server 20 that executes S210 of the connection processing when the model is constructed in Fig. 7 corresponds to a confirmation section. In addition, simulation section 22 that executes S230 of the connection processing when the model is constructed corresponds to a connecting section.

Equipment installation support system 10 described above stores the connection relationship information including the connection labels defining the connection relationship of pieces of the module data in storage section 23, and in a case where multiple pieces of module data are selected, confirms whether pieces of the module data are connectable based on the connection labels. Therefore, since it is possible to easily confirm whether pieces of the module data are connectable without causing the user to judge whether to connect, it is possible to appropriately construct model MD from the module data to rapidly execute the simulation.

In addition, equipment installation support system 10 includes information on the reference position and the connection direction in the connection relationship information, and automatically connects pieces of the module data confirmed to be connectable to each other by matching the reference positions and aligning the connection directions. As a result, since the user can omit efforts of connecting pieces of the module data to each other, it is possible to execute the simulation more rapidly.

The present disclosure is not limited to the above-described embodiment, and may be implemented in various aspects without departing from the technical scope of the present disclosure.

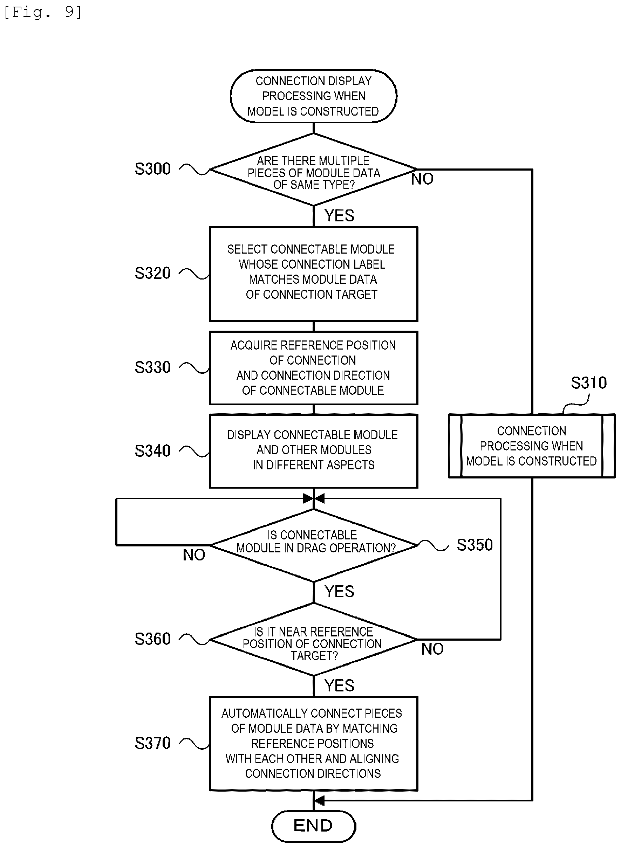

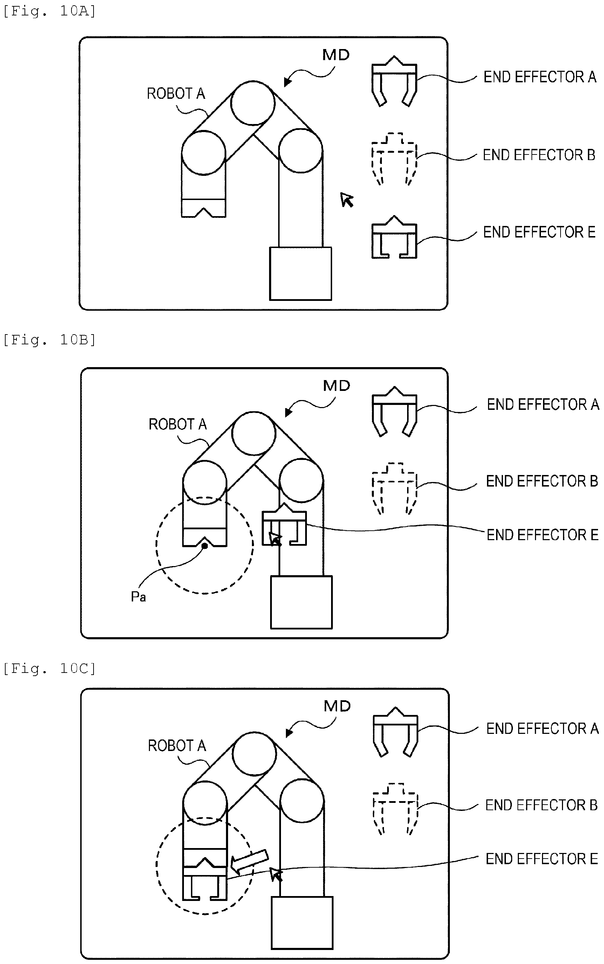

For example, in the above-described embodiment, whether pieces of the module data are connectable is confirmed based on the connection labels to automatically connect, however, the present invention is not limited to this, and the module data may be displayed in different display aspects depending on whether to connect on the construction screen (digital twin) of model MD of the simulation. Fig. 9 is a flowchart illustrating an example of connection display processing when a model is constructed, and Fig. 10 is an explanatory diagram illustrating a modification example of a state where pieces of the module data are automatically connected to each other.

In the connection display processing when the model is constructed in Fig. 9, first, simulation section 22 (display control section) determines whether there are multiple pieces of module data of the same type connectable to another module data as the module data for constructing model MD (S300). In S300, for example, in a case where multiple pieces of module data of the end effector connectable to the robot are selected, simulation section 22 executes an affirmative determination. When it is determined in S300 that there are no multiple pieces of module data of the same type, simulation section 22 executes the connection processing when the model is constructed illustrated in Fig. 7 (S310), and ends the processing. On the other hand, when simulation section 22 determines in S300 that there are multiple pieces of module data of the same type, simulation section 22 selects a connectable module whose connection label matches the module data of connection target (S320). Next, simulation section 22 acquires the reference position of the connection and the connection direction from the module data of the connectable module (S330), and displays the connectable module and other modules in different display aspects, for example, on display section 29 (S340).

As illustrated in Fig. 10A, in a case where robot A and multiple end effectors A, B, and E are selected, the connectable modules whose connection labels match the module data of robot A of connection target are end effectors A and E (refer to Fig. 6B). Therefore, simulation section 22 displays end effectors A and E, which are connectable modules, and the other end effectors B in different display aspects. In Fig. 10, end effectors A and E are turned on and displayed by solid lines, and end effector B is turned off and displayed by dashed lines. Simulation section 22 waits until the connectable module is in a drag operation (S350). Module data other than the connectable module, such as end effector B, may be such that drag operation is disabled. When it is determined that the connectable module is in the drag operation (refer to Fig. 10B), simulation section 22 determines whether the position is within a predetermined proximate range (indicated by dashed lines in Fig. 10B) centered on the reference position of the module data of connection target (S360), and returns to S350 when it is determined that the position is not within the proximate range. When it is determined that in S360 that the connectable module is in the predetermined proximate range, simulation section 22 automatically connects pieces of the module data of the connectable module and pieces of the module data of connection target by matching the reference positions with each other and aligning the connection directions (S370 and refer to Fig. 10C), and ends the present processing. The processing in S370 is executed in the same manner as S230.

As described above, in the modification example, since pieces of the module data connectable to pieces of the module data of connection target, such as the robot, are displayed to be recognizable by the user, the user can easily select the module data connectable. In this modification example, the connectable module and the other modules of the already selected module data are displayed in different display aspects, however, the present invention is not limited to this. When the module data is displayed on the module selection screen, the module data may be displayed in an aspect recognizable by the user, such as displaying a list of connectable modules. For example, in a case where the user selects robot A, end effectors A, E, and the like connectable to robot A may be displayed in a list on the module selection screen of end effector so that end effector B that cannot be connected is not displayed.

In the above-described embodiment, robot 61 (robot arm 62) and end effector 63 connected to robot 61 are exemplified, however, the present invention is not limited to this. For example, the present invention may be applied to robot arm 62, camera 64 or lighting 65 attached to robot arm 62, may be applied to feeder 67 and a base to which feeder 67 is connected, or may be applied to the connection between electric connectors or the connection between fluid connectors such as air.

In the above-described embodiment, the relationship between the connection shape and a corresponding shape is defined in the connection relationship information, however, the present invention is not limited to this, and information needs only define the connection relationship. For example, the connection relationship may be defined using a standard such as JIS-B8436 or a connection standard uniquely defined by the vendor. In addition, the connectable relationship is not limited to one-by-one, and may be a one-by-multiple relationship as in Fig. 6B, or a multiple-by-multiple relationship may be defined. In addition, the list of the connection relationship information in Fig. 6 may be displayed to the vendor or the customer.

In the above-described embodiment, work system 60 configured to include multiple modules including robot 61 is exemplified, however, the present invention is not limited to this, and the work system may be a system configured to include multiple modules and may not include robot 61. In addition, equipment installation support system 10 is exemplified as the simulation system, however, the present invention is not limited to this, and the system needs only execute the simulation using model MD constructed by the module data.

Here, the simulation system of the present disclosure may be configured as follows. For example, in the simulation system of the present disclosure, the storage section may include information on the reference position and the connection direction when connecting pieces of the module data to each other on the model in the connection relationship information, and the simulation system may include a connecting section that automatically connects pieces of the module data confirmed to be connectable by the confirmation section on the model to each other by matching the reference positions and aligning the connection directions. As a result, since the user can omit efforts of connecting pieces of the module data to each other, it is possible to execute the simulation more rapidly.

The simulation system of the present disclosure may include a display section that displays the module data to enable a user to perform a selecting operation, and a display control section that controls the display section so that the module data confirmed to be connectable by the confirmation section is displayed to be recognizable by the user. As a result, the user can easily select the module data connectable.

In the simulation system of the present disclosure, the storage section may be capable of additionally storing the connection relationship information of new module data by an operation of a user. As a result, it is possible to add the connection relationship information to the storage section as required, and it is possible to appropriately confirm whether to connect even when the number of module data increases.

### Industrial Applicability

The present disclosure can be used in the manufacturing industry of simulation systems and the like.

### Reference Signs List

10 equipment installation support system, 12 network, 20 management server, 21, 41, 51 control section, 22 simulation section, 23, 43, 53 storage section, 26, 46, 56 communication section, 28, 48, 58 input section, 29, 49, 59 display section, 30 module DB, 30A robot data, 30B end effector data, 30C feeder data, 30D conveyor data, 30E camera data, 30F lighting data, 31 module data, 37 vendor DB, 39 customer DB, 40 vendor terminal, 50 customer terminal, 60 work system, 61 robot, 62 robot arm, 63 end effector, 64 camera, 65 lighting, 66 board conveyance device, 67 feeder, 68 control device, MD model, MP marketplace, S board

## Claims

1. A simulation system that executes a simulation using a model constructed by module data of each of multiple modules, the system comprising:
a storage section configured to store connection relationship information defining a relationship between pieces of the module data connectable to each other; and
a confirmation section configured to confirm whether pieces of the module data are connectable based on the connection relationship information in a case where multiple pieces of module data are selected.

2. The simulation system according to claim 1, wherein
the storage section includes information on a reference position and a connection direction when connecting pieces of the module data to each other on the model in the connection relationship information, and
the simulation system further comprises
a connecting section configured to automatically connect pieces of the module data confirmed to be connectable by the confirmation section on the model to each other by matching the reference positions and aligning the connection directions.

3. The simulation system according to claim 1 or 2, further comprising:
a display section configured to display the module data to enable a user to perform a selecting operation; and
a display control section configured to control the display section so that the module data confirmed to be connectable by the confirmation section is displayed to be recognizable by the user.

4. The simulation system according to any one of claims 1 to 3, wherein the storage section is configured to additionally store the connection relationship information of new module data by an operation of a user.
